# EUROPEAN PATENT APPLICATION

(11) **EP 1 860 704 A2**
(43) Date of publication of application: **28.11.2007**
(21) Application number: 07251962.2
(22) Date of filing: 11.05.2007
(51) Int. Cl.: H01L 31/042, E04D 13/18

(54) **Solar roof tile**

(30) Priority: 26.05.2006 US 808918 P; 30.05.2006 US 803427 P
(71) Applicant: BP Corporation North America Inc., Warrenville, IL 60555 (US)
(72) Inventor: Placer, Neil V., Frederick, Maryland 21701 (US); Amin, Dinesh S., Clarksburg, Maryland 20871 (US); Kelly, George J., Mt. Airy, Maryland 21771 (US); Warfield, Donald B., Woodbine, Maryland 21797 (US); Garvison, Paul L., Frederick, Maryland 21701 (US)
(74) Representative: Hamer, Christopher K.

(57) **Abstract**

A frame system suitable for mounting a solar module on a roof, the frame system comprising at least one frame comprising an upper frame member, a lower frame member, a right-side frame member, a left-side frame member, at least one projecting member that is attached to or is an integral part of at least one of the side frame members, and projecting in a direction toward or substantially toward the lower frame member; and a batten comprising a recess for engaging the projecting member of the frame. The frame optionally comprises a means for affixing the frame to another frame.

## Description

### Field of the Invention

The present invention relates to a photovoltaic or solar module in the form of a tile that can be mounted on a roof or other structure. The present invention relates to a method for mounting such solar modules on a roof or other structure. The present invention also relates to a solar module roofing system and a method for installing such system.

### Background of the Invention

In recent years, considerable advances have been made in using photovoltaic cells or the like to directly convert solar energy into useful electrical energy. Typically, a plurality of photovoltaic cells are encased between a transparent cover sheet (e.g. glass, plastic, etc.) and a transparent or opaque backsheet, to form flat, rectangular-shaped modules (sometimes also called "laminates") of a manageable size (e.g. 2½' x 5'). These photovoltaic or solar modules are usually equipped with a frame around the perimeter of the module constructed of, for example, aluminum to provide strength, and also to provide a convenient means with which to attach the module to a roof or other structure. Such modules are then mounted on an existing roof or other structure in a manner so that they are exposed to the sun. For example, framed solar modules are bolted or clamped onto separate support structures, e.g. "racks", which, in turn, are securely bolted or screwed directly into the roof. Although such arrangement provides for the desired conversion of sunlight into electricity to be used for a home or for some other purpose, such installations are, essentially, an add-on to an existing building or other structure. Since solar electricity is increasing in use, there is a need to have the solar module become part of the building or other structure and preferably where the solar module functions in a manner in addition to producing solar electricity. For example, such building integrated solar modules can function as a façade or window for the structure, or can be or form part of the actual roof of a building, such as a home.

One building integrated solar module that has been developed is a solar module in the form of a roof tile. In one such solar module roof tile, a solar module is sealed into a frame, such as a frame made of aluminum, and the left and right sides of the generally square or rectangular-shaped frame are constructed so that they have a shape that corresponds to the shape of the edges of a roof tile, such as a terra cotta or concrete roof tile. Thus, when the roof is constructed, one or a number of such solar module roof tiles are placed on the roof along with the ordinary roof tiles and the solar module roof tiles fit in the roof structure in the same manner as the roof tile and function as a roof tile, but have the ability to generate electricity from exposure to the sun. Such solar roof tiles are attractive because they are integrated into the roof structure rather than being an add-on, and they generate electricity while also functioning as a roofing material. Because they are part of the roof rather than being an add-on, such solar roof tiles are aesthetically appealing.

However, it would be desirable to be able to install solar module roof tiles in a manner that is easy for the installer and yet form a durable, rain, wind and other weather resistant layer on the roof. The present invention provides for such a solar module roof tile and a method for its installation.

### Brief Summary of the Invention

This invention is a frame suitable for framing a solar module where the frame comprises an upper frame member, a lower frame member, a right-side frame member, a left-side frame member, and at least one projecting member attached to or an integral part of at least one of the side frame members, and where the projecting member projects in a direction toward or substantially toward the lower frame member. This invention is also a solar roof tile wherein a solar module is incorporated into such frame. This invention is also a frame system suitable for mounting a solar module on a roof, the frame system comprising at least one frame comprising an upper frame member, a lower frame member, a right-side frame member, a left-side frame member, at least one projecting member that is attached to or is an integral part of at least one of the side frame members, and projecting in a direction toward or substantially toward the lower frame member; and a batten comprising a recess for engaging the projecting member of the frame.

### Brief Description of the Figures

FIG. 1 is a three dimensional view of a solar module roof tile in accordance with an embodiment of this invention on a pitched roof along with regular concrete roof tiles.
FIG. 2 is a three dimensional view of a frame of a solar module roof tile in accordance with an embodiment of this invention where the frame members are shown in disassembled form.
FIG. 3 is a three dimensional view of an embodiment of the projecting members and a batten of this invention.
FIG. 4 is a section view of Figure 1 showing two solar module roof tiles in accordance with an embodiment of this invention on a pitched roof along with two regular concrete roof tiles.
FIG. 5 is a section view of a right frame member in accordance with an embodiment of this invention.
FIG. 6 is a section view of a left frame member in accordance with an embodiment of this invention.
FIG. 7 is a three dimensional view of a portion of an upper frame member in accordance with an embodiment of the frame of this invention.

### Detailed Description of the Invention

While the invention will be described in connection with specific preferred embodiments, it will be understood that this invention is not limited thereto. On the contrary, the invention is intended to cover all alternatives, modifications, and equivalents included within the spirit and scope of the invention as defined by the appended claims.

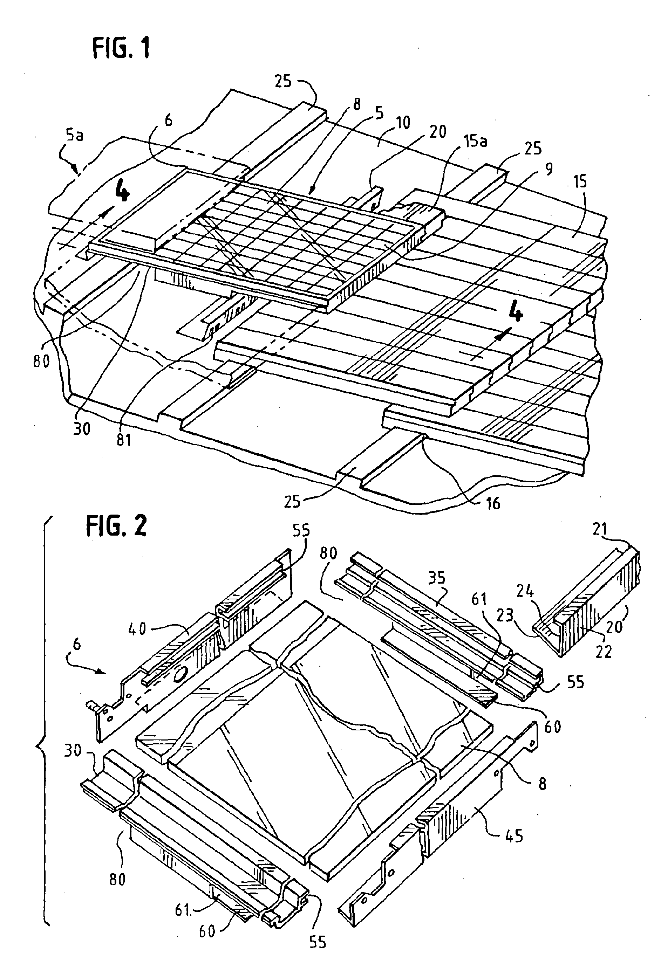

Referring now to the drawings, which are not necessarily drawn to scale and where the same elements are numbered the same in the drawings, Figure 1 shows a solar module roof tile 5 in accordance with this invention mounted on roof 10. Solar module roof tile 5 has a frame 6 and a solar module laminate 8 within such frame. Solar module laminate 8 has a plurality of individual solar cells 9 (only one numbered for clarity). Methods for manufacturing solar module laminates suitable for use in the solar module roof tile of this invention are well known by those of skill in the art. Any type of solar module laminate can be used to construct the solar module roof tile of this invention. For example, solar module laminates containing solar cells made from mono- or multi-crystalline silicon wafers, or thin film solar modules such as those comprising amorphous silicon photovoltaic elements, cadmium telluride/cadmium sulfide photovoltaic elements, or CIS photovoltaic elements can be used. Preferably, however, the solar modules do not have photovoltaic elements positioned in the module where they would be under another solar module roof tile or under an ordinary roof tile when the solar roof tile is installed on a roof.

Roof 10 has mounted thereon a plurality of ordinary concrete tiles 15 (only one numbered for clarity), where one such concrete tile 15a, drawn in partial form, is adjacent to solar module roof tile 5. This illustrates how the solar module roof tile of this invention engages an adjacent concrete roof tile, is integrated into the roof structure, and forms part of the roof. It is to be understood that when all the solar roof tiles are installed, the roof 10 would normally contain a plurality of solar roof tiles and, optionally, a plurality of ordinary roof tiles to form the complete roof. Solar module tile roof batten 20 in accordance with this invention and standard roof battens 25 are positioned on and affixed to roof 10. The concrete roof tiles 15 have a groove or channel 16 that engages roof batten 25. The roof battens 25 assist with lining up the roof tiles on the roof and assist with retaining the roof tiles on the pitched roof. Figure 1 shows how the left-side frame member 30 of frame 6 engages solar module tile batten 20. The upper solar module roof tile 5a in Figure 1 is not drawn in detail. However, it demonstrates how the solar module roof tiles of this invention overlap as do regular tiles to form a tiled roof.

Figure 2 shows the solar module roof tile of this invention where frame 6 is in disassembled form. Frame 6 has left-side frame member 30, right-side frame member 35, upper frame member 40, and lower frame member 45. Also, shown in Figure 2, is solar module laminate 8. Individual solar cells 9, however, are not presented in Figure 2. Each frame member 30, 35, 40 and 45 has a channel 55 along the inside of each frame member. When the solar module roof tile is assembled, the channel 55 receives the respective edges of solar module laminate 8. Typically, a suitable sealant is used to seal the edge of solar module laminate 8 within channel 55. Any suitable sealant can be used such as, for example, a butyl sealant. In this particular embodiment of frame 6 (Figure 1) the frame is assembled by screws or bolts that hold the respective frame members to each other. Details of such frame assembly are described hereinbelow. Figure 2 also shows how projecting members 60 are shaped so as to be able to engage batten 20. Projecting members 60 are located along the lower portion of frame side members 30 and 35 and project in a direction toward or substantially toward the lower frame member 45 in the fully assembled frame. There is a space or slot 61 between projecting members 60 and the lower portions of the side frame members 30 and 35. The lower frame member 45 is referred to as the lower frame member because when a solar module roof tile made with such frame is installed on a pitched roof, the lower frame member is the frame member that is closer to the bottom of the roof. Although shown in the figures as a "tab" shaped member, it is to be understood that projecting member 60 can be any suitable shape. For example, it can be a rod or post with a round or other cross-sectional shape. The projecting member can extend or project from the side members so it is parallel to the side member or, it can project at an angle from the side member. As will be described in more detail below, projecting member 60 engages the solar module tile batten 20 by projecting into the open recess 24 in the batten 20. Thus, a projecting member having any suitable shape that will accomplish such engagement will be equivalent to the "tab" shaped projecting member 60 as shown in the figures. The projecting member can be an integral part of the frame side member as shown in the figures, or it can be a separate piece that is attached in some manner, for example, by screws or bolts or rivets, to the frame side member. Solar module tile batten 20 has a "J" cross-sectional shape in the figures. The "J" shape is defined by upper flange 21, wall section 22 and base section 23. The recess 24 is within such "J" shaped batten. While a "J" shaped batten is shown in this embodiment of the invention, it is to be understood that the solar module tile batten can have any suitable shape that provides for a recess that engages projecting member 60. In operation, projecting member 60, when engaged with the solar module tile batten 20 that is affixed to a roof, prevents the solar module roof tile from sliding down a pitched roof during the installation process. Also, the engagement of the projecting member within the recess of solar module tile batten 20 prevents the solar tile from being lifted off the roof in the event of a strong wind. More specifically, with respect to the embodiment shown in the figures, when the solar module roof tile and batten 20 are installed on a roof, tab-shaped projection 60 would engage flange 21 on batten 20 if the solar module roof tile were to be lifted from the roof by wind.

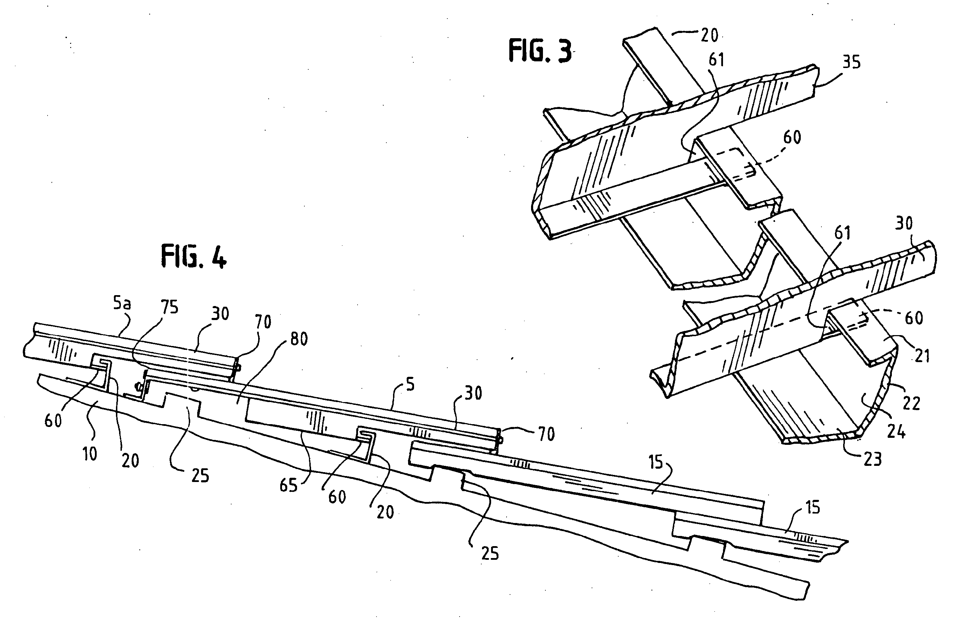

Figure 3 shows an expanded view of how projecting member 60 engages solar module tile batten 20 when the solar module roof tile is installed on a roof. In Figure 3 only the relevant portions of the left frame member 30 and right frame member 35 are presented. However, Figure 3 also illustrates how, in this embodiment, the tab-shaped projection 60 fits into recess 24 of solar module tile batten 20 and how upper flange 21 of the solar roof batten fits into opening or slot 61 on frame side members 30 and 35, thereby preventing the solar module roof tile from being uplifted in the event of a strong wind.

Figure 4 is a section view of Figure 1. Figure 4 shows how an upper solar module roof tile 5a overlaps with a lower solar roof tile 5, and how the solar roof tile 5 overlaps with a regular roof tile 15. Figure 4 also shows how projecting member 60, located on lower portion 65 of left side frame member 30, engages solar module tile batten 20. Figure 4 also shows that projection 60 is located on left side frame member 30 closer to lower end 70 of left frame member 30 than to upper end 75 of left side frame member 30. Preferably, projecting member 60 is located closer to the lower end of the solar module roof tile than to the upper end because this provides for greater leverage in the event that wind acts to force an uplift of the solar module roof tile. Opening 80 in the left side frame member and corresponding opening in the right side frame member provides clearance for a roof batten 25 to pass under the solar roof tile. Without such clearance, the respective section of the roof batten would need to be removed thereby complicating the installation of the solar roof tiles on the roof. Solar module tile batten 20 can have one or more pre-formed holes (not shown in Figure) in base 23 to receive screws, bolts, nails or other means for fastening the batten to the roof. When such batten is fastened to a roof, it is preferable to apply an adhesive or sealant to the roof where the bolt, nail, screw, or other means for fastening enters the roof to fasten the batten to the roof. Such adhesive or sealant provides for waterproofing. Solar module roof batten 20 can optionally have one or more holes or other openings 81 (for clarity, only one such opening is numbered in Figure 1) in the wall section 22 of the batten 20 to allow for the passage of water so that water does not collect and remain in recess 24. The solar module batten can be made of any suitable material such as, for example, aluminum or other metal, or one or more polymeric or resin materials. It is to be understood that the solar module tile batten of this invention can be any suitable length. For example, each batten can have a length that is shorter, preferably slightly shorter, than the length of the lower frame member. The solar module tile battens, preferably those that are shorter than the length of the lower frame member, can be mounted on a roof so that there is a space or gap between the battens. Such space or gap provides for the passage of water.

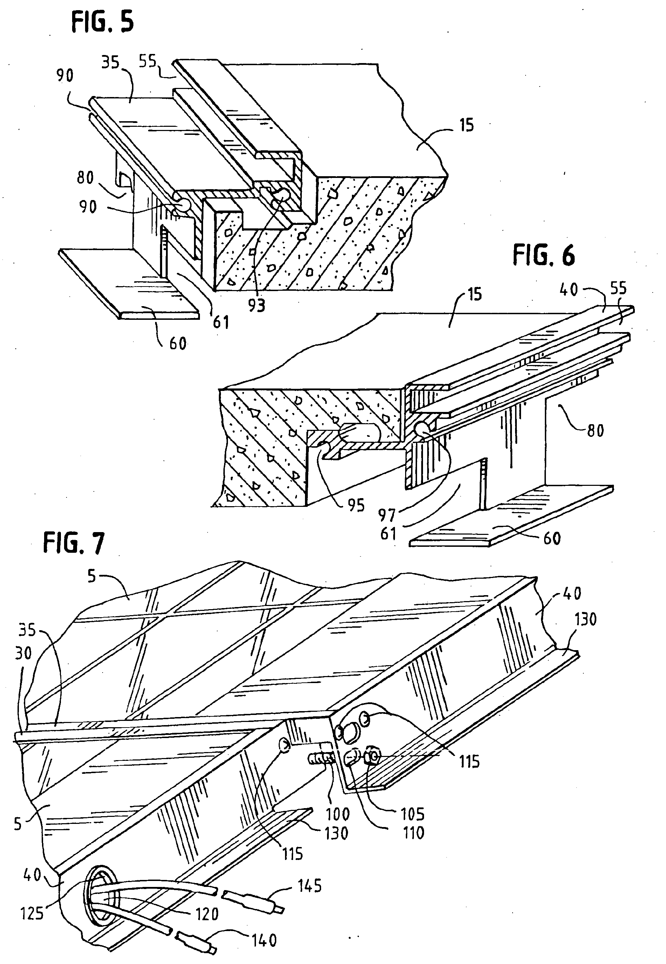

Figure 5 shows a section view through the right side frame member and an adjacent concrete tile engaged with the right side frame member. Figure 6 shows a section view through the left side frame member and an adjacent concrete tile engaged with the left side frame member. Figures 5 and 6 illustrate how the outer portion of side frame members 35 and 40 engage a standard concrete tile to form a seam between the solar module roof tile and the standard roof tile. The profile of the frame side members 35 and 40 as presented in Figures 5 and 6 is one particular profile. However, it is to be understood that such profile can be changed to accommodate the different types of roof tiles. "Screw boss" holes 90, 93, 95, and 97 can be used to attach the lower frame member to the side frame members by inserting a screw or bolt through holes in the lower frame member and then into the corresponding screw boss. Corresponding screw boss holes located on the opposite side of the side frame member (not all shown in Figures 5 and 6) can be used for attaching the upper frame member to the side frame members.

Figure 7 shows two solar roof tiles of this invention in the process of being joined together or affixed to each other by threaded stud 100 and nut 105. Threaded stud 100 is attached to upper frame member 40 of first solar roof tile 5 and passes through opening 110 in the upper frame member 40 of second solar module roof tile 5. The two solar modules are thereafter attached or affixed to each other by tightening the nut 105 on threaded stud 100. Although, as shown in Figure 7, a threaded stud is the means for affixing one frame to another frame, it is to be understood that any suitable means for affixing such frames can be used. For example, one or more of a rivet, screw, bolt, weld, clip, clamp or the like, can also be used. It is not, however, necessary to attach one such solar roof tile to another in such manner or any other manner. However, it is advantageous to attach adjacent solar modules tiles if their frames are made of an electrically conducting material such as a metal. This allows for a convenient way to electrically ground the frames of the solar roof tiles and thereby reduce the possibility of causing an electrical shock. Although not shown in the figures, an electrical ground wire can be attached to a frame for electrically grounding the frame, or collection of connected frames, for example, a row of solar module roof tiles, of this invention. Such grounding wire can be attached to one or more frames by the threaded stud 100. For example, one end of the ground wire can end in a lug and such lug attached to the threaded stud using a suitable nut. The other end of the wire is properly connected to ground. Aluminum, for example, is one of the preferred materials for making the frames of this invention although other metals, and other materials such as one or more polymeric or resin materials, can be used to construct the frame. Screws or bolts 115 shown in Figure 7 secure upper frame members 40 to side frame members 30 and 35. Opening 120 with grommet 125 in upper frame member 40 provides a passage way for the solar module output wires 140 and 145 so that the solar module roof tiles can be electrically connected in a desired manner. Flange 130 on upper frame member 40 rests on roof surface 10 (Figure 1) when the solar module roof tile is mounted on a roof. Screws or bolts or other suitable means can be used to affix the flange and thus the solar roof tile to the roof. Flange 130 can have preformed holes or other openings (such holes or openings not shown in the Figure) to receive such bolts, screws or other means for affixing the flange to a roof. Flange 130 can be constructed so that it is disposed at an angle relative to the upper frame member 40. The angle is suitably selected so that the flange will lay flat on a pitched roof to which it is attached. As with attaching the solar module tile battens to the roof, any penetrations in the roof that are made as a result of affixing the flange 130 to a roof can be sealed with a suitable sealant.

The solar module roof tiles of this invention are easily installed on a pitched roof. The installation is simplified because of the projecting member and the solar module roof batten. In the preferred installation method, one or more solar module roof battens are affixed to the roof in a desired pattern corresponding to the eventual placement of the solar roof tiles on the roof. As discussed above, a space or gap can be provided between adjacent battens during their installation on a roof to allow for the passage of water. The solar module roof tile is placed on the roof in the desired location either adjacent to another solar module roof tile or to a standard roof tile so that the side member of the solar module roof tile overlaps and engages with the side member of the adjacent solar module roof tile or the side of a standard roof tile. When the solar module roof tile is placed on the roof the projecting members located on the side members of the solar module roof tile are engaged with the solar module roof batten so that the batten prevents the solar module roof tile from sliding down the roof. The solar module roof tile can thereafter be permanently affixed to the roof as described above by using bolts, screws or other fastening means. Thus, the solar module roof tiles of this invention can be conveniently attached to a roof without having to otherwise hold the solar module roof tile by hand or by some other means. This greatly aids the installation of the solar roof tiles. This installation can be repeated to install the desired number of solar module roof tiles in rows or in an array on a roof. Solar modules generally have two electrical output leads 140 and 145 that exit the solar module through an electrical junction box located on the back of the solar module (junction box not shown in the figures). Before permanently affixing the solar module to the roof, such electrical leads are preferably positioned so that they exit opening 120 in upper frame member 40. The electrical lead from one solar roof tile can then be connected with the appropriate electrical lead from an adjacent solar module roof tile in the desired manner. Prior to mounting the solar module roof tiles of this invention on a roof, the roof is preferably covered with an asphalt-based felt and then with a layer of fireproof material such as Versashield^{®} or other suitable fireproofing material.

As set forth above, the frame of this invention can be made of a metal such as aluminum. However, other suitable metals can be used to construct the frame. If made of aluminum or other metal that can be extruded, the upper, lower and side members of the frame can be extruded in the desired shape, and the projecting member can be formed by removing portions of the frame member to provide for such projecting member. However, it is not necessary for the frame of this invention to be constructed of separate members. It can, for example, be one piece, such as a single unit manufactured with the upper, lower and side members attached. Such a frame can be made by an injection molding procedure using a suitable polymeric or resin material.

## Claims

1. A frame suitable for a solar module comprising:
an upper frame member,
a lower frame member,
a right-side frame member,
a left-side frame member, and
at least one projecting member attached to or an integral part of at least one of the side frame members, and projecting in a direction toward or substantially toward the lower frame member;
each of the frame members having at least an outer side, an inner side, an upper portion running along at least part of the length of the member, and a lower portion running along at least part of the length of the member.

2. The frame of Claim 1 wherein each of the frame members are initially separate pieces and are joined to form the frame.

3. The frame of Claim 1 or Claim 2 wherein the outer side of each of the side frame members has a portion shaped to engage, in an interlocking manner, an edge of a roof tile.

4. The frame of Claim 3 wherein the portion shaped to engage the edge of a roof tile is U shaped.

5. The frame of any one of Claims 1 to 4 wherein a projecting member is in the shape of a tab.

6. The frame of any one of Claims 1 to 5 wherein a projecting member is located on the lower portion of at least one of the side frame members and is positioned parallel to the direction of the side frame member.

7. The frame of any one of Claims 1 to 6 further comprising a means for affixing one frame to another frame.

8. The frame of any one of Claims 1 to 7 wherein the side frame members have upper ends and lower ends and the projecting member is positioned on the side frame member closer to the lower end than to the upper end.

9. The frame of any one of Claims 1 to 8 wherein the side frame members have upper ends and lower ends and an opening in the lower potion of the side frame member positioned closer to the upper end than to the lower end of the side frame member.

10. A frame suitable for a solar module comprising:
an upper frame member,
a lower frame member,
a right-side frame member,
a left-side frame member,
each of the frame members having at least an outer side, an inner side, an upper portion running along at least part of the length of the member, and a lower portion running along at least part of the length of the member; and
a means for affixing a frame to another frame.

11. The frame of any one of Claims 7 to 10 wherein the means for affixing one frame to another frame is located on the upper frame member.

12. The frame of any one of Claims 7 to 11 wherein the means for affixing one frame to another frame is a threaded bolt affixed to the frame.

13. The frame of any one of Claims 10 to 12 wherein the upper frame member has a right end adjacent the right frame member and a left end adjacent the left frame member and the means for affixing one frame to another frame is positioned at or near the left end of the upper frame member.

14. The frame of any one of Claims 7 to 13 further comprising a ground wire attached to the means for affixing.

15. A frame system comprising:
at least one frame suitable for a solar module, wherein the frame comprises an upper frame member,
a lower frame member,
a right-side frame member,
a left-side frame member,
at least one projecting member attached to or an integral part of at least one of the side frame members, and projecting in a direction toward or substantially toward the lower frame member; and
a batten comprising a recess for engaging the projecting member of the frame.

16. The frame system of Claim 15 wherein the batten is J shaped.

17. The frame system of Claim 15 or Claims 16 wherein the batten comprises one or more weep holes.

18. The frame system of any one of Claims 15 to 17 wherein the batten is shorter in length than the lower member of the frame.

19. A method for installing a framed solar module on a pitched roof comprising:
(a) attaching a batten to the roof at a desired location on the roof, where the batten comprises a recess having an open portion, and where the batten is attached to the roof so that the open portion of the recess faces an upper portion of the pitched roof, and
(b) positioning a solar module framed with the frame of Claim 1 on the roof so that at least one projecting member of the frame engages the recess of the batten.

20. The method of Claim 19 wherein the positioning comprises moving the framed solar module in a downward direction to engage the projecting member with the batten.

21. The method of Claim 19 or Claim 20 wherein the frame is positioned next to and in contact with an adjacent roof tile.

22. The method of any one of Claims 19 to 21 wherein after step (b) the frame is affixed to the roof.

23. The method of any one of Claims 19 to 22 wherein at least two battens are attached to the roof and the battens are affixed to the roof with a gap between the battens to provide for the passage of water.

24. The method of any one of Claims 19 to 23 where in the frame further comprises a means for affixing a frame to an adjacent frame and each frame is affixed to an adjacent frame in a row of frames.

25. The method of Claim 24 further comprising attaching at least one ground wire to at least one frame, wherein the ground wire is attached to the means for affixing the frames.

26. A solar module roof tile comprising a solar module framed within the frame of any one of Claims 1 to 18.

27. The frame system of any one of Claims 15 to 18 when a solar module is framed within the frame.

28. A solar module roof tile comprising a solar module framed within the frame of any one of Claims 10 to 14.
